# EUROPEAN PATENT APPLICATION

(11) **EP 4 518 027 A1**
(43) Date of publication of application: **05.03.2025**
(21) Application number: 23778543.1
(22) Date of filing: 24.04.2023
(51) Int. Cl.: H01Q 1/38

(54) **ANTENNA, RADAR SENSING SYSTEM, AND ELECTRONIC DEVICE**

(30) Priority: 27.04.2022 CN 202210456201; 24.03.2023 CN 202310301738
(71) Applicant: Calterah Semiconductor Technology (Shanghai) Co., Ltd, Shanghai 201210 (CN)
(72) Inventor: ZHUANG, Kaijie, Shanghai 201210 (CN); CHEN, Zhefan, Shanghai 201210 (CN); LI, Shan, Shanghai 201210 (CN); HUANG, Xuejuan, Shanghai 201210 (CN); YU, Chenwu, Shanghai 201210 (CN); WANG, Dian, Shanghai 201210 (CN)
(74) Representative: Balder IP Law, S.L.
(86) International application number: PCT/CN2023/090387
(87) International publication number: WO 2023/186179

(57) **Abstract**

The embodiments of the present application relate to the technical field of antennas technology, and an antenna, a radar sensing system, and an electronic device are provided. The antenna includes: a first antenna structure (101) extending along a first direction and having a first side (111) and a second side (121) opposite to the first side (111). The antenna further includes multiple second antenna structures (102) arranged along the first direction, where each of the multiple second antenna structures (102) is connected to the first side (111) and extends in a direction away from the first side (111) in the second direction with an extension length of k1×(λ/2)*.* The antenna further includes multiple third antenna structures (103) arranged along the first direction, where each of the multiple third antenna structures (103) is connected to the second side (121) and extends in a direction away from the second side (121) in the second direction with an extension length of k2×(λ/2). The multiple second antenna structures (102) and the multiple third antenna structures (103) are arranged alternatingly along the first direction. One of k1 and k2 is a positive integer greater than 1, and the other of k1 and k2 is a positive integer greater than or equal to 1. In this way, it is beneficial at least to increase the radiation angle range of the antenna without significantly increasing antenna complexity and power loss.

## Description

### CROSS REFERENCE TO RELATED APPLICATIONS

The present application claims priority to Chinese patent application No. 202111682290.9, filed April 27, 2022, and to Chinese patent application No. 202210009395.6, filed March 24, 2023, each of which is incorporated by reference herein in its entirety.

### TECHNICAL FIELD

The present disclosure relates to the technical field of antennas, and in particular to an antenna, a radar sensing system, and an electronic device.

### BACKGROUND

Intelligent driving is an important lever for the combination of industrial revolution and information technology. Rapid development will change the flow of people, resource elements, and products, and fundamentally change human life. With the increasing development of science and technology, intelligent driving has begun to be popularized in daily life. Among them, sensors play a crucial role in intelligent driving, and they are the channels through which an intelligent system of a vehicle obtains external information.

Therefore, sensors need to be adapted to the application scenario to provide higher quality external information. A millimeter wave radar is taken as an example, in scenarios such as automatic parking, parking search, or 360 degrees full vehicle radar coverage, it is usually required that the radar has a wide detection range, while the demand for gain is not as important. In this way, the radar will provide more external information from different angles, which makes it easier to make relevant decisions.

At present, in order to achieve a wide antenna detection range on the radar, generally, a power divider is used to build radar antenna array. Thus, the antenna radiation angle range is increased through multiple antennas in the antenna array, thus bringing a wider detection range for the radar.

However, in the technical solution of using power divider to build radar antenna array, the design complexity of antenna is high, which has adverse impact on antenna clearance, and power divider has power loss, and once power distribution error occurs, antenna operation will be affected.

### SUMMARY

The embodiments of the present application embodiment provide an antenna, a radar sensing system, and an electronic device, which are at least conducive to increasing the radiation angle range of the antenna without significantly increasing antenna complexity and power loss.

According to some embodiments of the present application, on the one hand, an antenna is provided. The antenna includes a first antenna structure extending along a first direction and having a first side and a second side opposite to the first side arranged along a second direction, where the first direction intersects with the second direction. The antenna further includes multiple second antenna structures arranged along the first direction, where each of the multiple second antenna structures is connected to the first side and extends in a direction away from the first side in the second direction with an extension length of k1×(λ/2), where λ is an operating wavelength of the antenna. The antenna further includes multiple third antenna structures arranged along the first direction, where each of the multiple third antenna structures is connected to the second side and extends in a direction away from the second side in the second direction with an extension length of k2×(λ/2). The multiple second antenna structures and the multiple third antenna structures are arranged alternatingly along the first direction, one of k1 and k2 is a positive integer greater than 1, and the other of k1 and k2 is a positive integer greater than or equal to 1.

In some embodiments, any two of the multiple second antenna structures have a same feeding phase.

In some embodiments, any two of the multiple third antenna structures have a same feeding phase.

In some embodiments, a respective second antenna structure of the multiple second antenna structures is spaced apart from a third antenna structure adjacent to the respective second antenna structure in the multiple third antenna structures by an interval of λ/2 in the first direction.

In some embodiments, in response to k1 being greater than k2, an interval between each of the multiple second antenna structures and an adjacent third antenna structure close to a reference end of the first antenna structure along the first direction is λ1, and radio frequency (RF) signals in the first antenna structure is transmitted from the reference end to the other end along the first direction, where λ1 ∈ (0, λ/2)*.*

In some embodiments, a width of at least one of the multiple second antenna structures changes along the second direction and/or a width of at least one of the multiple third antenna structures changes along the second direction.

In some embodiments, at least one of the multiple second antenna structures and/or at least one of the multiple third antenna structures includes a first portion and a second portion, both of which extend in the direction away from the first side in the second direction; one end of the first portion is connected to the first antenna structure, and the other end of the first portion is connected to the second portion, and the first portion and the second portion have different widths along the first direction.

In some embodiments, the first portion has an extension length of k3×(λ/2) along direction, the second portion has an extension length of k4×(λ/2) along the second direction, and k3 and k4 are both positive integers.

In some embodiments, a width of at least one of the multiple second antenna structures and/or at least one of the multiple third antenna structures remains unchanged along the second direction.

In some embodiments, the antenna further includes a dielectric layer, a first metal layer, and a second metal layer. The dielectric layer has a first surface and a second surface opposite to the first surface, the first antenna structure, the multiple second antenna structures and the multiple third antenna structures are arranged on the first surface. The first metal layer is arranged on the second surface, and the second metal layer is configured to cover a part of the second surface that is not covered by the first antenna structure, the multiple second antenna structures and the multiple third antenna structures.

In some embodiments, the first antenna structure, the multiple second antenna structures and the multiple third antenna structures are patch structures, or the first antenna structure, the second antenna structure and the third antenna structure are slot structures.

According to some embodiments of the present application, on the other hand, a radar sensing system is provided. The radar sensing system includes an antenna device including a transmitting antenna and a receiving antenna, where the transmitting antenna and/or receiving antenna is the antenna as described above. The radar sensing system further includes a signal transceiving device coupled to the antenna device, where the signal transceiving device is configured to transmit detection signals via the transmitting antenna, to receive echo signals via the receiving antenna, and to mix the detection signals with the echo signals to output baseband digital signals. The echo signals are formed by reflecting the detection signals by an object.

According to some embodiments of the present application, on the other hand, an electronic device is further provided. The electronic device includes the radar sensing system as described above, a signal processing device coupled to the signal transceiving device in the radar sensing system, where the signal processing device is configured to process the baseband digital signals to obtain measurement information of the object.

In some embodiments, the electronic device further includes an automotive driving assistance device; where the antenna device in the radar sensing system is assembled on board at a casing position.

The technical solution provided according to the embodiments of the present application has at least the following advantages.

The extension lengths of each of the multiple second antenna structures and each of the multiple third antenna structures along the second direction are k1×(λ/2), k2×(λ/2), respectively. One of k1 and k2 is a positive integer greater than 1, and the other of k1 and k2 is a positive integer greater than or equal to 1. In this way, a TM10 mode plus a higher-order mode are provided based on the multiple second antenna structures and the multiple third antenna structures. Alternatively, a higher-order mode plus a higher-order mode are provided based on the multiple second antenna structures and the multiple third antenna structures. Moreover, the multiple second antenna structures and the multiple third antenna structures are arranged alternatingly along the first direction, so that during the operation of the antenna, signals radiated from the above two operating modes cooperate with each other, to provide a wider radiation beam and a larger radiation angle range, which is beneficial for increasing the radiation angle range. The structure is simple and the complexity is low, which is conducive to improving the antenna clearance ratio. The antenna array is not required, so the power division processing is omitted, and the power loss caused by the power divider and the risk of power division error are avoided.

### BRIEF DESCRIPTION OF THE DRAWINGS

One or more embodiments are described as examples with reference to the corresponding figures in the accompanying drawings, and the exemplary description does not constitute a limitation to the embodiments. Elements with the same reference numerals in the drawings are represented as similar elements. The figures in the accompanying drawings do not constitute a proportion limitation unless otherwise stated.
FIG. 1 is a schematic structural view of a first portion of an antenna provided according to an embodiment of the present application;
FIG. 2 is a radiation pattern related to an antenna provided according to an embodiment of the present application;
FIG. 3 is a variation diagram of return loss involved in an antenna provided according to an embodiment of the present application;
FIG. 4 is a schematic structural view of a second portion of an antenna provided according to an embodiment of the present application;
FIG. 5 is schematic structural view of a third structure of an antenna provided according to an embodiment of the present application;
FIG. 6 is schematic structural view of a fourth structure of an antenna provided according to an embodiment of the present application;
FIG. 7 is schematic structural view of a fifth structure of an antenna provided according to an embodiment of the present application;
FIG. 8 is an equivalent schematic diagram of an antenna provided according to an embodiment of the present application;
FIG. 9 is another radiation pattern related to an antenna provided according to an embodiment of the present application;
FIG. 10 is a surface current distribution diagram of an antenna provided according to an embodiment of the present application;
FIG. 11 is a surface current distribution diagram of an antenna under an existing TM10 mode;
FIG. 12 is a surface current distribution diagram of an antenna under an existing TM20 mode;
FIG. 13 is schematic structural view of a sixth structure of an antenna provided according to an embodiment of the present application;
FIG. 14 is schematic structural view of a seventh structure of an antenna provided according to an embodiment of the present application;
FIG. 15 is a side view of an eighth structure of an antenna provided according to an embodiment of the present application;
FIG. 16 is a top view of the eighth structure of an antenna provided according to an embodiment of the present application;
FIG. 17 is a schematic structural view of a radar sensing system provided according to an embodiment of the present application;
FIG. 18 is a schematic structural view of an electronic device provided according to an embodiment of the present application.

### DETAILED DESCRIPTION

From the background technology, it is urgent to provide antenna with a low complexity, a low power consumption, and a large radiation angle range.

The embodiments of the present application provide an antenna, a radar sensing system, and an electronic device, where the antenna is provided with multiple second antenna structures and multiple third antenna structures. The extension lengths of each of the multiple second antenna structures and each of the multiple third antenna structures along the second direction are k1×(λ/2), k2×(λ/2), respectively, which enables the multiple second antenna structures and the multiple third antenna structures to provide two operating modes, e.g., a TM10 mode or a higher-order operating mode, thereby increasing the beam width and improving the radiation angle range through the mutual cooperation of the two operating modes, without the need for adding complex structures. It is conducive to reducing complexity when providing antennas with a radiation angle range, without the need for power dividers, which is beneficial for reducing power consumption.

In order to make the purpose, technical solution, and advantages of the embodiments of the present application clearer, the embodiments of the present disclosure will be described in detail below with reference to the accompanying drawings. However, those skilled in the art may appreciate that, in the various embodiments of the present disclosure, numerous technical details are set forth in order to provide the reader with a better understanding of the present disclosure. However, the technical solutions claimed in the present disclosure may be implemented without these technical details and various changes and modifications based on the following embodiments.

The division of the following embodiments is for convenience in description and should not constitute any limitations on the specific implementation method of the present application. Each embodiment can be combined and referenced with each other without contradiction.

An aspect of the embodiments of the present application provides an antenna. The following will provide a detailed explanation of the antenna provided according to the embodiments of the present application in conjunction with the accompanying drawings.

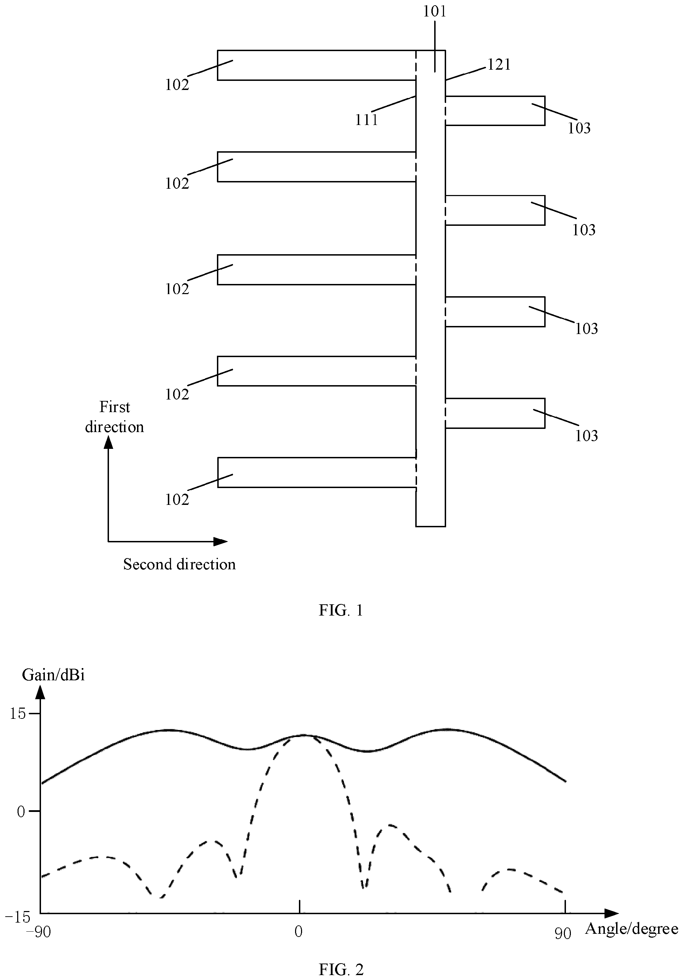

In some embodiments, referring to FIG. 1, the antenna includes: a first antenna structure extending along a first direction and having a first side and a second side opposite to the first side along a second direction, where the first direction intersects with the second direction. The antenna further includes multiple second antenna structures arranged along the first direction, where each of the multiple second antenna structures is connected to the first surface and extends in a direction away from the first side (111) in the second direction with an extension length of k1×(λ/2), where λ is an operating wavelength of the antenna. The antenna further includes multiple third antenna structures arranged along the first direction, where each of the multiple third antenna structures is connected to the second side and extends in a direction away from the second side (121) in the second direction with an extension length of k2×(λ/2). The multiple second antenna structures and the multiple third antenna structures are arranged alternatingly along the first direction, one of k1 and k2 is a positive integer greater than 1, and the other of k1 and k2 is a positive integer greater than or equal to 1.

In order to facilitate those skilled in the art to better understand FIG. 1 and subsequent schematic structural views of the antenna, the contact positions (or regions) between the first antenna structure 101 and the multiple second antenna structures 102, and the contact positions (or regions) between the first antenna structure 101 and the multiple third antenna structures 103 are represented by dashed lines, which will not be repeated. Moreover, the first direction and the second direction shown in FIG. 1 are only examples. Preferably, the first direction is perpendicular to the second direction. In other embodiments, the first direction intersects with but not perpendicular to the second direction.

In this way, during operation, the RF signals are transmitted along the first direction through the first antenna structure 101. In response to the RF signals being transmitted to positions where the multiple second antenna structure 102 contact the first side 111 of the first antenna structure 101, the RF signals are transmitted along the second direction and away from the first side 111 through the multiple second antenna structures 102. Due to the extension length of the second antenna structure 102 along the second direction being k1×(λ/2), other higher-order modes are activated. In response to the RF signals being transmitted to positions where the multiple third antenna structures 103 contact the second side 121 of the first antenna structure 101, the RF signals are transmitted along the second direction and away from the second side 121 through the multiple third antenna structures 103. Due to the extension length of the third antenna structure 103 along the second direction being k2×(λ/2), a TM10 mode or one of the operating modes in other higher-order modes is activated. Moreover, the multiple second antenna structures 102 and the multiple third antenna structures 103 are arranged alternatingly along the first direction. Therefore, the RF signals radiated from the two operating modes exhibit a larger beam coverage angle range, to increase the radiation angle range. In addition, the structure of the antenna is simple, without setting complex antenna array. The complexity is low, which is conducive to improving the antenna clearance ratio, so that the power division processing required by the antenna array is omitted, and the power loss and the risk of power division error caused by the power divider are avoided. That is, without significantly increasing antenna complexity and power loss, the radiation angle range of the antenna is increased.

It should be noted that the antenna shown in FIG. 1 only takes k1=2 and k2=1 as examples, that is, k1 being an integer greater than 1 and k2 being an integer greater than or equal to 1 are taken as examples, so that higher-order modes for operation are activated by the multiple second antenna structures 102. In other embodiments or other situations, k1 may be an integer greater than or equal to 1, and k2 may be an integer greater than or equal to 1, which allows the multiple third antenna structures 103 to activate higher-order modes for operation, which will not be repeated here.

To facilitate those skilled in the art to better understand the above effects, the following will be explained in conjunction with the accompanying drawings.

According to the technical solution provided according to the above embodiments, the antenna radiation pattern shown in FIG. 2 is obtained by setting k1=1 and k2=2 and conducting experiments accordingly. In FIG. 2, the antenna radiation pattern obtained in the existing TM10 mode is represented by dashed lines, while the antenna radiation pattern obtained based on the technical solution provided according to the above embodiments is represented by solid lines. It can be seen from FIG. 2 that compared to the dashed line, the beam with a gain of 6dB or above in the solid line radiation pattern covers a wider angle, and the coverage angle exceeds 180 degrees with a maximum gain of 11.6dBi, to increase the radiation angle range.

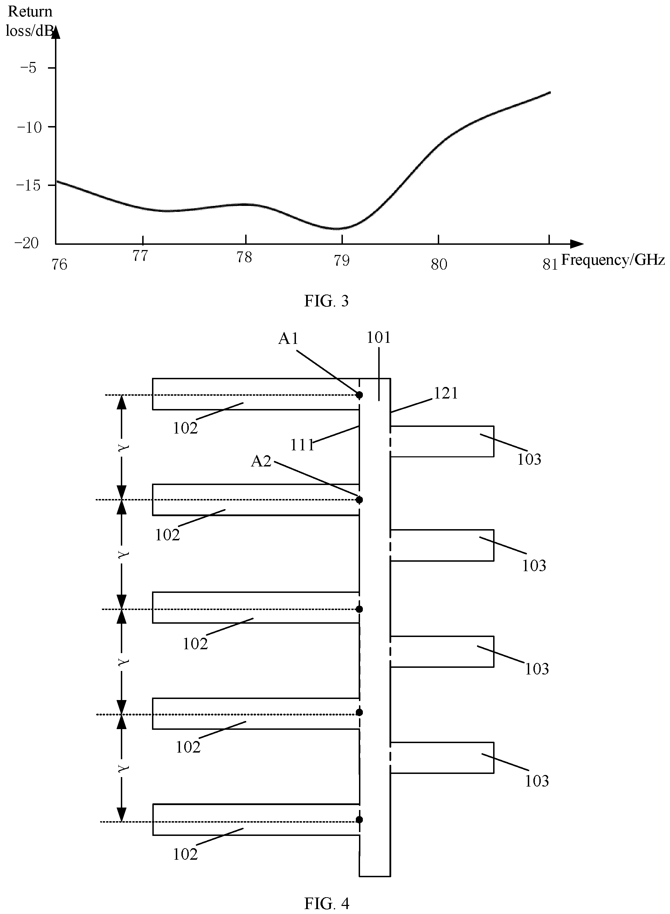

In addition, based on the technical solution provided according to the above embodiments, k1 is set to be 1 and k2 is set to be 2, and experiments are conducted accordingly to obtain a schematic diagram of the change in return loss as shown in FIG. 3. It can be seen from FIG. 3 that in the frequency range of 76GHz to 79GHz, the loss is controlled below -10dB, which achieves 90% of the energy to be fed into the antenna, and ensures strong feeding ability of the antenna.

It should be noted that in the above embodiments, one of k1 and k2 is a positive integer greater than 1, and the other is a positive integer greater than or equal to 1, which is mainly to emphasize that the multiple second antenna structures 102 and the multiple third antenna structures 103 are not provided with TM10 operating mode at the same time. It should be understood that in the case where both the multiple second antenna structures 102 and the multiple third antenna structures 103 provide TM10 operating mode, the radiation angle range of the antenna is relatively small, and the radiation angle range has not been improved.

It should also be noted that this embodiment does not limit the number of second antenna structures 102 and the number of the third antenna structures 103, which may be 1, 2, 3, 4, 5, 6, 7... and the number of second antenna structures 102 and the number of the third antenna structures 103 may be equal, such as both being 5 or may be different, such as the number of second antenna structures 102 being 5 and the number of third antenna structures 103 being 4.

In some examples, k1=1 and k2=2, the TM10 mode is activated by the multiple second antenna structures 102, and the TM20 mode is activated by the multiple third antenna structures 103.

In some examples, k1=3 and k2=3, the TM30 mode is activated by the multiple second antenna structures 102, and the TM30 mode is activated by the multiple third antenna structures 103.

In some examples, k1=3 and k2=2, the TM30 mode is activated by the multiple second antenna structures 102, and the TM20 mode is activated by the multiple third antenna structures 103.

The above are only specific examples of k1 and k2. In other examples, the specific values of k1 and k2 may also be determined based on application scenarios, user requirements, etc., which will not be described in detail here.

In some embodiments, the first antenna structure 101, the multiple second antenna structures 102, and the multiple third antenna structures 103 are patch structures. That is, the first antenna structure 101, the multiple second antenna structures 102 and the multiple third antenna structures 103 constitute a patch antenna.

In some embodiments, the first antenna structure 101, the multiple second antenna structures 102, and the multiple third antenna structures 103 are slot structures. That is, the first antenna structure 101, the multiple second antenna structures 102 and the multiple third antenna structures 103 constitute a slot antenna.

In some embodiments, any two second antenna structures 102 have the same feeding phase.

All second antenna structures 102 have the same feeding phase, which is conducive to simplifying the analysis of the overall radiation pattern of the antenna and changing the shape of the antenna radiation pattern.

In order to achieve any two second antenna structures 102 having the same feeding phase, in some embodiments, as shown in FIG. 4, an interval between two adjacent second antenna structures 102 is set to λ.

In this way, the phase difference between the two adjacent second antenna structures 102 is 2π, which means that the RF signals radiated by the two adjacent second antenna structures 102 are in the same phase, i.e., they have the same feeding phase.

It should be noted that the interval between the multiple second antenna structures 102 and the multiple third antenna structures 103 involved in the embodiment of the present application is determined by the interval between each of the multiple second antenna structures 102 and each of the multiple third antenna structures 103 and a center point of a region where each of the multiple second antenna structures 102 and each of the multiple third antenna structures 103 contacts the first antenna structure 101. FIG. 4 is taken as an example, the interval between two adjacent second antenna structures 102 is the interval between the center points A1 and A2 where the two adjacent second antenna structures 102 contacts the first antenna structure 101.

Of course, the above is only a specific implementation explanation for having the same feeding phase for the multiple second antenna structures 102. In other embodiments, the interval between any two second antenna structures 102 may be integer multiple of the λ, so that the phase difference between the two second antenna structures 102 is an integer multiple of 2π, that is, in the same phase, thus having the same feeding phase, etc., which will not be repeated here.

In some embodiments, any two third antenna structures 103 have the same feeding phase.

The feeding phase of all third antenna structures 103 is the same, which is conducive to simplifying the analysis of the overall radiation pattern of the antenna and changing the shape of the antenna radiation pattern.

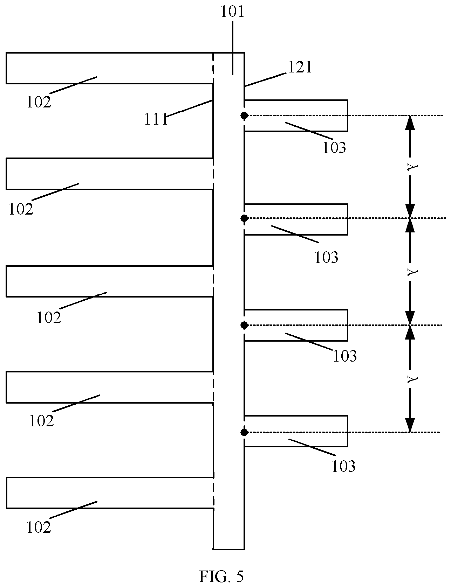

In order to achieve any two third antenna structures 103 having the same feeding phase, in some embodiments, as shown in FIG. 5, the interval between two adjacent third antenna structures 103 is set to be λ.

In this way, the phase difference between the two adjacent third antenna structures 103 is 2π, which means that the RF signals radiated by the two adjacent third antenna structures 103 are in phase, that is, they have the same feeding phase.

Of course, the above is only a specific implementation explanation for having the same feeding phase for the multiple third antenna structures 103. In other embodiments, the interval between any two third antenna structures 103 may be integer multiple of the λ, so that the phase difference between the two third antenna structures 103 is an integer multiple of 2 π, that is, in the same phase, thus having the same feeding phase, etc., which will not be repeated here.

In some embodiments, the feeding phase of the multiple second antenna structures 102 and the multiple third antenna structures 103 are the same.

This is conducive to simplifying the analysis of the overall radiation pattern of the antenna and changing the shape of the antenna radiation pattern.

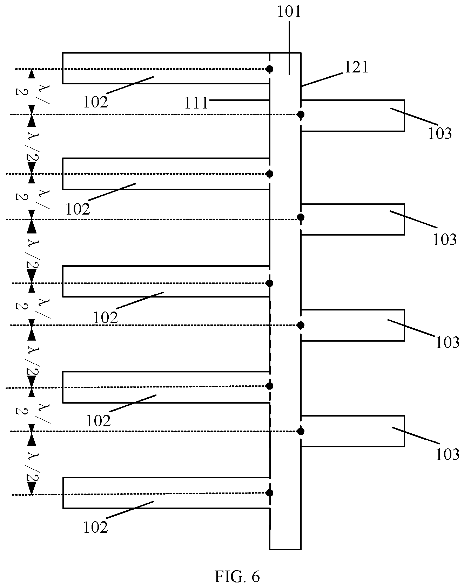

In order to achieve the same feeding phase between the multiple second antenna structures 102 and the multiple third antenna structures 103, in some embodiments, as shown in FIG. 6, the interval between two adjacent antenna structures in the multiple second antenna structures 102 and the multiple third antenna structures 103 along the first direction is set to be λ/2*.*

In this way, the phase difference caused by the transmission distance between each of the multiple second antenna structures 102 and the adjacent third antenna structure 103 is π, and each of the multiple third antenna structure 103 extends in the opposite direction with each of the multiple second antenna structures 102 (the multiple second antenna structures 102 extend along the direction opposite to the second direction, and the multiple third antenna structures 103 extend along the second direction), that is, the phase difference caused by spatial arrangement is π. Thus, the phase difference between each of the multiple second antenna structures 102 and the adjacent third antenna structure 103 is 2π, that is, in phase, resulting in the same feeding phase.

Of course, the above is only a specific implementation explanation for the multiple second antenna structures 102 and the multiple third antenna structures 103 having the same feeding phase. In other embodiments, the interval between each of the multiple second antenna structures 102 and the adjacent third antenna structure 103 may also be λ/2+s×λ, s is a non negative integer, so that the phase difference between each of the multiple second antenna structures 102 and the adjacent third antenna structure 103 is an integer multiple of 2π, that is, in phase, and thus has the same feeding phase, which will not be repeated here.

In some embodiments, the feeding phase of the multiple second antenna structures 102 and the multiple third antenna structures 103 may also be different.

It should be understood that in response to the feeding phases of the multiple second antenna structures 102 and the multiple third antenna structures 103 are different, the radiation pattern of the antenna deflects compared to the situation where the feeding phase are the same, so that the direction with the largest radiant intensity has a certain deflection, which is conducive to meeting the application needs of the antenna in a situation where the measurement of specific angles is the main task, such as the radar has an installation angle of 45 degrees on the vehicle. By adjusting the feeding phase difference between the multiple second antenna structures 102 and the multiple third antenna structures 103 of the radar, the radiation angle with the highest antenna strength is deflected by 45 degrees. Therefore, the radiation angle with the highest antenna strength is facing the front or rear of the vehicle, which is more conducive to measuring the external environment around the vehicle.

To facilitate those skilled in the art to better understand the above embodiments, the following will provide specific explanations.

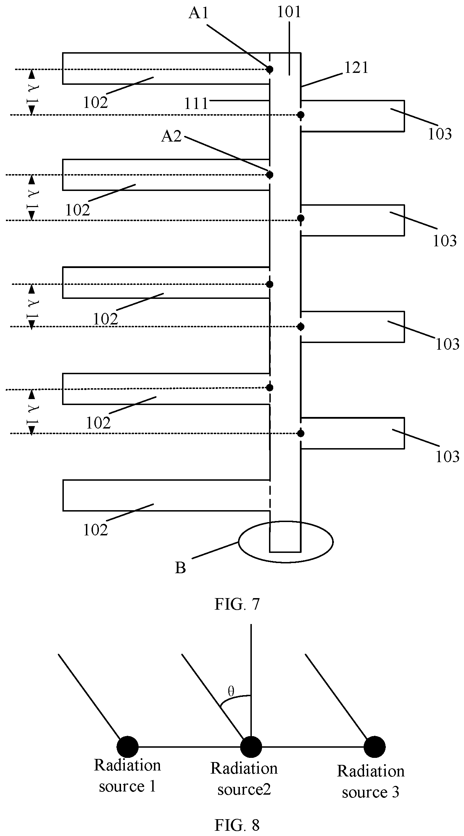

In some embodiments, assuming k1>k2, referring to FIG. 7, an interval between each of the multiple second antenna structures and an adjacent third antenna structure close to a reference end of the first antenna structure along the first direction is λ1, and radio frequency (RF) signals in the first antenna structure is transmitted from the reference end to the other end along the first direction, where λ1 ∈ (0, λ/2).

Among them, the reference end of the first antenna structure 101 is the point where the RF signal first enters when transmitting the RF signal, that is, end B in FIG. 7.

The first antenna structure 101, the multiple second antenna structures 102, and the multiple third antenna structures 103 can be equivalent to the three radiation sources shown in FIG. 8. Among them, a radiation source 1 corresponds to each of the multiple second antenna structures 102 with a phase of 180 degrees, a radiation source 2 corresponds to the first antenna structure 101 with a phase of 0 degree, and a radiation source 3 corresponds to each of the multiple third antenna structures 103 with a phase of θ, where the value of θ is determined by λ1.

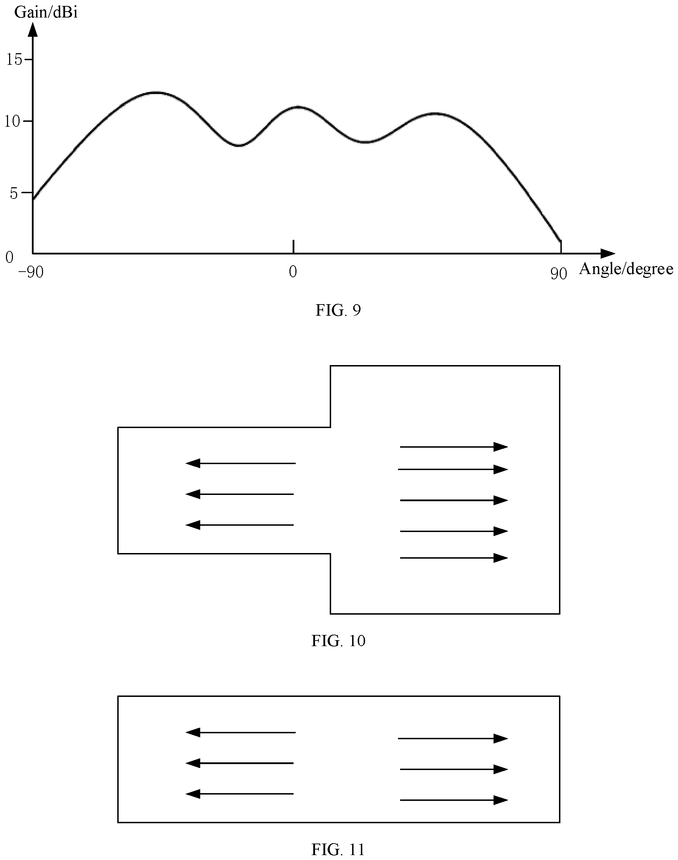

The situation of k1=1 and k2=2 is taken as an example, the radiation pattern shown in FIG. 9 was obtained through experiments. The beam gain of the situation where the multiple second antenna structures 102 has a distance λ1 from the multiple third antenna structures 103 is shown by the solid line, which is increased compared to the beam gain shown by the solid line in FIG. 2, and the radiation pattern of the antenna is deflected. For the situation where the antenna mainly measures at a specific angle, such as the application scenario of angle radar with a 45 degrees installation angle, it is more conducive to measurement.

In some embodiments, a width of at least one of the multiple second antenna structures 102 changes along the second direction and/or a width of at least one of the multiple third antenna structures 103 changes along the second direction.

That is to say, the width of at least one of the multiple second antenna structures 102 changes and/or a width of at least one of the multiple third antenna structures 103 changes. It is advantageous to flexibly set the width of at least one in the multiple second antenna structures 102 and/or the width of at least one in the multiple third antenna structures 103, where the width is a dimension along the first direction, thereby adjusting the current distribution on at least one of the multiple second antenna structures 102 and/or on at least one of the multiple third antenna structures 103 by adjusting their width, which achieves adjustments to the peaks and valleys in the antenna radiation pattern, and makes it more suitable for the application scenarios.

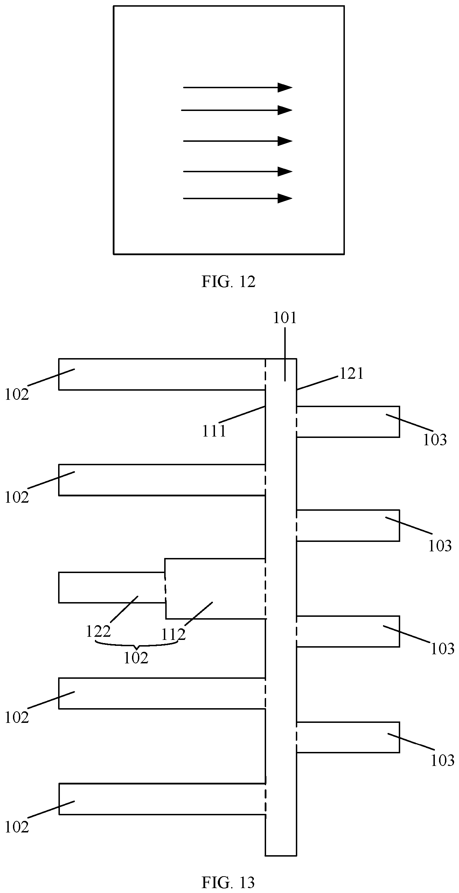

The situation of k1=1 and k2=2 is taken as an example, the surface current distribution on the antenna is shown in FIG. 10, which is different from the surface current distribution in TM10 mode shown in FIG. 11 and TM20 mode shown in FIG. 12.

In order to those skilled in the art to better understand the above embodiments, the following will be specifically explained in conjunction with drawings.

In some embodiments, referring to FIG. 13, at least one of the multiple second antenna structures 102 and/or at least one of the multiple third antenna structures 103 includes a first portion 112 and a second portion 122, both of which extend in a direction away from the first side along the second direction. One end of the first portion 112 is connected to the first antenna structure 101, the other end of the first portion 112 is connected to the second portion 122, and the first portion 112 and the second portion 122 have different widths along the first direction.

In some embodiments, the sum of the extension length of the first portion 112 along the second direction and the extension length of the second portion 122 along the second direction is k1×(λ/2).

In some embodiments, the extension length of the first portion 112 along the second direction is k3×(λ/2), the extension length of the second portion 122 along the second direction is k4×(λ/2), where k3 and k4 are both positive integers.

It should be noted that FIG. 13 is only an example of a situation where the first portion 112 and second portion 122 included in a certain second antenna structure 102 are both rectangular. In other cases, it can also be a third antenna structure 103 or certain antenna structures (including the multiple second antenna structures 102 and/or the multiple third antenna structures 103) including the first portion 112 and the second portion 122. The first portion 112 and the second portion 122 may be trapezoid, elliptical, circular, and other shapes. In addition, the shapes of the first portion 112 and the second portion 122 may be of the same type, such as both being elliptical, or they can be of different types, such as one being trapezoid, the other being elliptical. The first portion 112 and the second portion 122 included in different second antenna structures 102 (and/or third antenna structure 103) may be the same or different.

In some embodiments, referring to FIG. 1, FIG. 4 to FIG. 7, the width of at least one second antenna structure 102 remains unchanged along the second direction, and/or the width of at least one third antenna structure 103 along the first direction remains unchanged along the second direction.

This is beneficial for reducing the structural complexity of at least one of the multiple second antenna structures 102 and/or at least one of the multiple third antenna structures 103, which reduces production difficulty, facilitates production, improves production efficiency, and reduces resource waste.

It should be noted that FIG. 1, FIG. 4 to FIG. 7, and FIG. 13 are only specific structural descriptions of the multiple second antenna structures 102 and the multiple third antenna structures 103. In other embodiments or examples, the multiple second antenna structures 102 and the multiple second antenna structures 103 may also be elliptical, circular, trapezoidal, and which will not be repeated here.

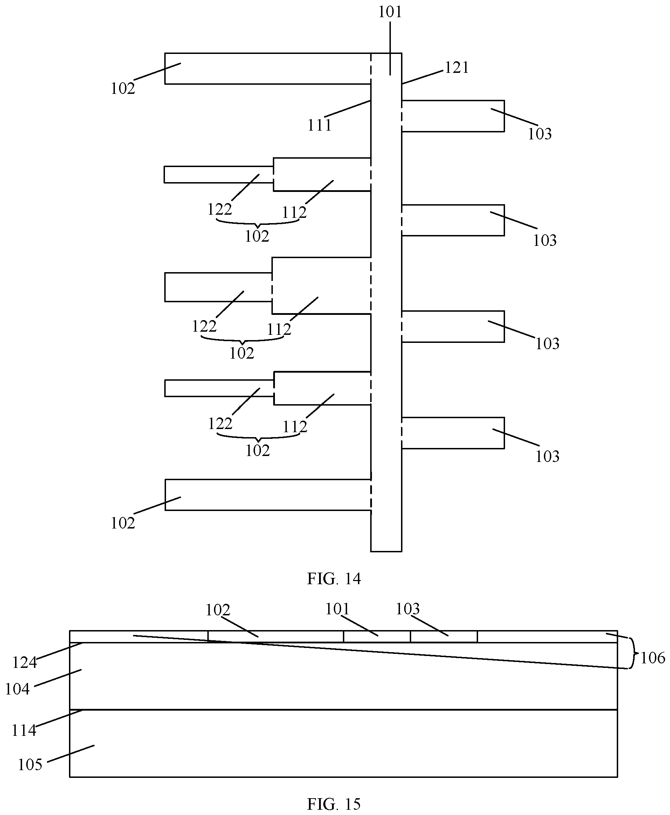

In some embodiments, as shown in FIG. 14, k1=2 and k2=1, the width of each of the multiple third antenna structures 103 along the first direction remains unchanged along the second direction, and widths of the two second antenna structures 102 farthest apart along the first direction remains unchanged along the second direction. Each of the other second antenna structures 102 includes the first portion 112 and the second portion 122.

In some situations, the first portion 112 and second portion 122 of different second antenna structures may not be completely identical as shown in FIG. 14. In some situations, the first portion 112 and second portion 122 of different second antenna structures may also be identical or different.

It should be noted that FIG. 14 only takes k1=2 and k2=1 as examples. In other embodiments, k1=1 and k2=2 may also be used. Correspondingly, a part of the multiple third antenna structures 103 include the first portion 112 and the second portion 122, which will not be elaborated here.

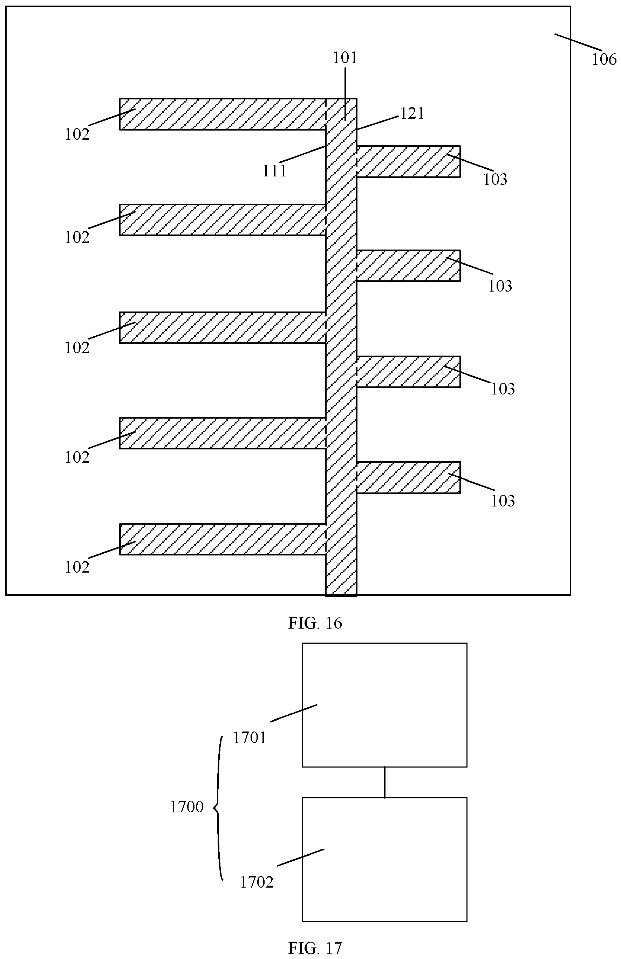

In some embodiments, as shown in FIG. 15 and FIG. 16, the antenna further includes a dielectric layer 104, a first metal layer 105, and a second metal layer 106. The dielectric layer 104 has a first surface 114 and a second surface 124 opposite to the first surface 114. The first antenna structure 101, the multiple second antenna structures 102 and the multiple third antenna structures 103 are arranged on the first surface 114. The first metal layer 105 is arranged on the second surface 124, and the second metal layer 106 is configured to cover a part of the second surface 124 that is not covered by the first antenna structure 101, the multiple second antenna structures 102 and the multiple third antenna structures 103. Among them, FIG. 15 is a side view of the antenna, FIG. 16 is a top view of the antenna, and the unfilled area in FIG. 16 is the second metal layer 106.

That is, the polarization surface of the antenna is covered with metal as much as possible, so that the surface waves of the horizontally polarized antenna can be suppressed, thereby achieving optimization of the antenna radiation pattern.

In summary, the extension lengths of each of the multiple second antenna structures 102 and each of the multiple third antenna structures 103 along the second direction are k1×(λ/2), k2×(λ/2), respectively. One of k1 and k2 is a positive integer greater than 1, and the other of k1 and k2 is a positive integer greater than or equal to 1. In this way, two operating modes in a TM10 mode and higher-order modes are provided based on the multiple second antenna structures 102 and the multiple third antenna structures 103, so that during the operation of the antenna, signals radiated from the above two operating modes cooperate with each other, to provide a wider radiation beam and a larger radiation angle range, which is beneficial for increasing the radiation angle range. The structure is simple and the complexity is low, which is conducive to improving the antenna clearance ratio. The antenna array is not required, so the power division processing is omitted, and the power loss caused by the power divider and the risk of power division error are avoided.

On the other hand, a radar sensing system is provided according to the embodiments of the present application, as shown in FIG. 17. The radar sensing system 1700 includes: an antenna device 1701 including a transmitting antenna and a receiving antenna, where the transmitting antenna and/or receiving antenna is the antenna as described above.

The radar sensing system further includes a signal transceiving device 1702 coupled to the antenna device 1701, where the signal transceiving device 1702 is configured to transmit detection signals via the transmitting antenna, to receive echo signals via the receiving antenna, and to mix the detection signals with the echo signals to output baseband digital signals. The echo signals are formed by reflecting the detection signals by an object.

It is not difficult to find that this embodiment is a system embodiment corresponding to the above embodiments, and it can be implemented in conjunction with the above embodiments. The relevant technical details mentioned in the previous embodiments are still valid in this embodiment, which will not be repeated here to avoid repetition. Correspondingly, the relevant technical details mentioned in this embodiment can also be applied to the above embodiments.

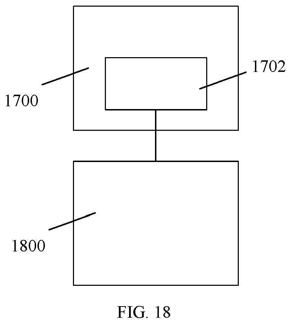

On the other hand, an electronic device is further provided according to the embodiments of the present application, as shown in FIG. 18, the electronic device includes a radar sensing system 1700 as described above, a signal processing device 1800 coupled to the signal transceiving device in the radar sensing system 1700, where the signal processing device 1800 is configured to process the baseband digital signals to obtain measurement information of the object.

In some embodiments, the electronic device further includes an automotive driving assistance device, where the antenna device 1701 in the radar sensing system 1700 is assembled on board at a casing position.

It is not difficult to find that this embodiment is a device embodiment corresponding to the previous embodiments, and this embodiment can be implemented in conjunction with the previous embodiments. The relevant technical details mentioned in the previous embodiments are still valid in this embodiment, which will not be repeated here to avoid repetition. Correspondingly, the relevant technical details mentioned in this embodiment can also be applied to the previous embodiments.

Those of Ordinary skills in the art can understand that the above embodiments are specific embodiments for implementing the present application, and in practical applications, various changes may be made in form and details without deviating from the spirit and scope of the present application.

## Claims

1. An antenna, comprising:
a first antenna structure (101) extending along a first direction and having a first side (111) and a second side (121) opposite to the first side (111) along a second direction, wherein the first direction intersects with the second direction;
a plurality of second antenna structures (102) arranged along the first direction, wherein each of the plurality of second antenna structures (102) is connected to the first side (111) and extends in a direction away from the first side (111) in the second direction with an extension length of k1×(λ/2)*,* wherein λ is an operating wavelength of the antenna;
a plurality of third antenna structures (103) arranged along the first direction, wherein each of the plurality of third antenna structures (103) is connected to the second side (121) and extends in a direction away from the second side (121) in the second direction with an extension length of k2×(λ/2);
wherein the plurality of second antenna structures (102) and the plurality of third antenna structures (103) are arranged alternatingly along the first direction, one of k1 and k2 is a positive integer greater than 1, and the other of k1 and k2 is a positive integer greater than or equal to 1.

2. The antenna according to claim 1, wherein any two of the plurality of second antenna structures (102) have a same feeding phase.

3. The antenna according to claim 1, wherein any two of the plurality of third antenna structures (103) have a same feeding phase.

4. The antenna according to claim 1, wherein a respective second antenna structure of the plurality of second antenna structures (102) is spaced apart from a third antenna structure adjacent to the respective second antenna structure in the plurality of third antenna structures (103) by an interval of λ/2 in the first direction.

5. The antenna according to claim 1, wherein in response to k1 being greater than k2, an interval between each of the plurality of second antenna structures (102) and an adjacent third antenna structure (103) close to a reference end of the first antenna structure (101) along the first direction is λ1, and radio frequency (RF) signals in the first antenna structure (101) is transmitted from the reference end to the other end along the first direction, wherein λ1 ∈ (0, λ/2)*.*

6. The antenna according to claim 1, wherein a width of at least one of the plurality of second antenna structures (102) changes along the second direction and/or a width of at least one of the plurality of third antenna structures (103) changes along the second direction.

7. The antenna according to claim 6, wherein at least one of the plurality of second antenna structures (102) and/or at least one of the plurality of third antenna structures (103) comprises a first portion (112) and a second portion (122), both of which extend in the direction away from the first side (111) in the second direction; one end of the first portion (112) is connected to the first antenna structure (101), and the other end of the first portion (112) is connected to the second portion (122), and the first portion (112) and the second portion (122) have different widths along the first direction.

8. The antenna according to claim 7, wherein the first portion (112) has an extension length of k3×(λ/2) along direction, the second portion (122) has an extension length of k4×(λ/2) along the second direction, and k3 and k4 are both positive integers.

9. The antenna according to claim 7, wherein k1 equals to 2, k2 equals to 1, a width of each of the plurality of third antenna structures (103) remains unchanged along the second direction, and widths of two second antenna structures (102) farthest apart along the first direction comprise the first portion (112) and the second portion (122).

10. The antenna according to claim 1, wherein a width in the first direction of at least one of the plurality of second antenna structures (102) and/or at least one of the plurality of third antenna structures (103) remains unchanged along the second direction.

11. The antenna according to claim 1, wherein the antenna further comprises a dielectric layer (104), a first metal layer (105), and a second metal layer (106); the dielectric layer (104) has a first surface (114) and a second surface (124) opposite to the first surface (114), the first antenna structure (101), the plurality of second antenna structures (102) and the plurality of third antenna structures (103) are arranged on the first surface (114); the first metal layer (105) is arranged on the second surface (124), and the second metal layer (106) is configured to cover a part of the second surface (124) that is not covered by the first antenna structure (101), the plurality of second antenna structures (102) and the plurality of third antenna structures (103).

12. The antenna according to claim 1, wherein the first antenna structure (101), the plurality of second antenna structures (102), and the plurality of third antenna structures (103) are patch structures, or the first antenna structure (101), the second antenna structure (102), and the third antenna structure (103) are slot structures.

13. A radar sensing system, comprising:
an antenna device (1701) comprising a transmitting antenna and a receiving antenna, wherein the transmitting antenna and/or receiving antenna is the antenna according to any one of claims 1 to 12;
a signal transceiving device (1702) coupled to the antenna device (1701), wherein the signal transceiving device (1702) is configured to transmit detection signals via the transmitting antenna, to receive echo signals via the receiving antenna, and to mix the detection signals with the echo signals to output baseband digital signals; wherein the echo signals are formed by reflecting the detection signals by an object.

14. An electronic device, comprising:
the radar sensing system (1700) according to claim 13;
a signal processing device (1800) coupled to the signal transceiving device (1702) in the radar sensing system (1700), wherein the signal processing device (1800) is configured to process the baseband digital signals to obtain measurement information of the object.

15. The electronic device according to claim 14, comprising: an automotive driving assistance device; wherein the antenna device (1701) in the radar sensing system (1700) is assembled on board at a casing position.
